(19) Europäisches Patentamt
European Patent Office
Office européen des brevets

(11) **EP 4 579 598 A1**

(12) **EUROPEAN PATENT APPLICATION**
published in accordance with Art. 153(4) EPC

(43) Date of publication:
**02.07.2025 Bulletin 2025/27**

(21) Application number: **23867128.3**

(22) Date of filing: **28.07.2023**

(51) International Patent Classification (IPC):
**G06T 13/40** (2011.01)

(52) Cooperative Patent Classification (CPC):
**G06N 3/0464; G06N 3/08; G06T 13/40**

(86) International application number:
**PCT/CN2023/109801**

(87) International publication number:
**WO 2024/060833 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.09.2022 CN 202211163917**

(71) Applicant: **Huawei Cloud Computing
Technologies Co., Ltd.
Guiyang, Guizhou 550025 (CN)**

(72) Inventors:
• **ZHANG, Pengfei**
**Guiyang, Guizhou 550025 (CN)**
• **QIN, Rui**
**Guiyang, Guizhou 550025 (CN)**
• **HU, Bin**
**Guiyang, Guizhou 550025 (CN)**
• **LI, Jiangwei**
**Guiyang, Guizhou 550025 (CN)**

(74) Representative: **Isarpatent
Patent- und Rechtsanwälte
Barth Hassa Peckmann & Partner mbB
Friedrichstraße 31
80801 München (DE)**

(54) **IMAGE PROCESSING METHOD**

(57)    This application provides an image processing method, including: obtaining first data, where the first data corresponds to a first scene model, a first character, and a first location of the first character in the first scene model; and generating N first images based on the first data, where the N first images are in one-to-one correspondence with N second locations, an $n^{th}$ first image is used for presenting a pose of the first character at an $n^{th}$ second location, and the pose of the first character at the $n^{th}$ second location corresponds to a terrain feature of the first scene model at the $n^{th}$ second location. According to embodiments of this application, the pose of the first character corresponds to the terrain feature of the first scene model, so that the first character can automatically avoid an obstacle in a complex terrain (for example, a three-dimensional terrain).

```
┌─────────────────────────────────────────────┐
│                                             │
│         S301: Obtain first data             │
│                                             │
└─────────────────────────────────────────────┘
                     │
                     │
┌─────────────────────────────────────────────┐
│                                             │
│   S302: Generate N first images based on    │
│          the first data                     │
└─────────────────────────────────────────────┘
```

FIG. 8

## Description

This application claims priority to Chinese Patent Application No. 202211163917.4, filed with the China National Intellectual Property Administration on September 23, 2022 and entitled "IMAGE PROCESSING METHOD", which is incorporated herein by reference in its entirety.

## TECHNICAL FIELD

This application relates to the image processing field, and specifically, to an image processing method.

## BACKGROUND

Currently, a behavior tree-based approach, a state machine-based approach, or a motion matching (motion matching)-based approach may be used to drive a digital character. In the behavior tree-based approach, a behavior tree may be constructed to represent a behavior of the digital character. In the state machine-based approach, a plurality of states of the digital character may be constructed in advance, along with conditions for transitioning between different states. In the motion matching-based approach, an animation database may be constructed in advance.

However, in the foregoing three approaches for driving the digital character, the behavior tree, a state machine, or the animation database is preconfigured. As a result, the behavior of the digital character is fixed and lacks flexibility, and transition between actions of the digital character may not be smooth. In addition, based on the foregoing three approaches, the action of the digital character has low realism due to poor adaptation to a terrain. For example, the action of the digital character may be distorted and may not conform to physical laws. In addition, a design of the behavior tree, a design of the state machine, and production of the animation database all need high costs.

## SUMMARY

This application provides an image processing method.

According to a first aspect, an image processing method is provided, and includes:
obtaining first data, where the first data corresponds to a first scene model, a first character, and a first location of the first character in the first scene model; and generating N first images based on the first data, where the N first images are in one-to-one correspondence with N second locations, an $n^{th}$ first image is used for presenting a pose of the first character at an $n^{th}$ second location, and the pose of the first character at the $n^{th}$ second location corresponds to a terrain feature of the first scene model at the $n^{th}$ second location.

According to this embodiment of this application, the pose of the first character corresponds to the terrain feature of the first scene model, so that the first character can automatically avoid an obstacle in a complex terrain (for example, a three-dimensional terrain).

Specifically, based on height information of the first scene model and a navigation path of the first character, an instruction generator may obtain a terrain feature of the navigation path using an attention mechanism, and further generate a drive instruction for the first character based on the navigation path and the terrain feature of the navigation path. Therefore, the first character can automatically avoid the obstacle in the complex terrain (for example, the three-dimensional terrain).

With reference to the first aspect, in some implementations of the first aspect, the first data further corresponds to a third location of the first character in the first scene model, and the third location is a randomly generated location or a user-specified location; and the generating N first images based on the first data includes: determining the N second locations based on the first location and the third location, where the N second locations are on a first path, and the first path is an actual motion path of the first character from the first location to the third location; and generating the N first images based on the N second locations and terrain features corresponding to the N second locations.

With reference to the first aspect, in some implementations of the first aspect, the first data further corresponds to a second image, the second image is used for presenting a pose of the first character at the first location, the N first images are frames between the second image and a third image in a first video, the third image is used for presenting a pose of the first character at the third location, the N second locations are on the first path, and the first path is the actual motion path of the first character from the first location to the third location.

With reference to the first aspect, in some implementations of the first aspect, a similarity between the first path and a second path falls within a preset range, and the second path is a navigation path of the first character from the first location to the third location.

According to this embodiment of this application, the actual motion path and the navigation path of the first character may not completely overlap, provided that the similarity between the actual motion path and the navigation path falls within the preset range. Therefore, the actual motion path of the first character is diversified.

Specifically, in this embodiment of this application, a DRL policy network may be trained and optimized based on a simulation result fed back by a physical simulator, to diversify a motion path of a digital character.

With reference to the first aspect, in some implementations of the first aspect, the $n^{th}$ first image is obtained through prediction using a neural network based on an image preceding the $n^{th}$ first image.

According to this embodiment of this application, a motion generator may predict a subsequent pose of the first character based on a pose of the first character in a first frame, to generate a corresponding image. In view of this, transitioning between actions of the first character can be smoother. In addition, when the pose of the first character in the first frame is abnormal, the first character can quickly recover from an abnormal state based on the predicted subsequent pose of the first character.

With reference to the first aspect, in some implementations of the first aspect, when the pose of the first character at the first location is abnormal, one or more of the N first images are used for presenting a process in which the first character transitions from an abnormal pose to a normal pose. That the pose of the first character is abnormal includes: The first character is in a fallen state, and the first character is stuck.

With reference to the first aspect, in some implementations of the first aspect, the first scene model is a three-dimensional scene model, and a terrain of the first scene model is a three-dimensional terrain. The first character is a non-player character NPC, the first character includes a plurality of joint points, and each of the plurality of joint points can be driven.

According to a second aspect, a character driving method is provided, and includes:

obtaining first data, where the first data corresponds to a first scene model, a first character, an initial location of the first character, and a target location of the first character, and the initial location and the target location are both in the first scene model; determining a navigation path of the first character moving from the initial location to the target location; and generating, based on the navigation path and a terrain feature of the first scene model, a drive instruction for the first character using a first neural network.

The first neural network is a neural network in an instruction generator.

According to this embodiment of this application, the first character is driven based on the navigation path of the first character and the terrain feature of the scene model, so that the first character can automatically avoid an obstacle in a complex terrain (for example, a three-dimensional terrain).

With reference to the second aspect, in some implementations of the second aspect, the generating a drive instruction for the first character using a first neural network includes: obtaining, based on the navigation path and the terrain feature of the first scene model, a terrain feature of the navigation path using an attention mechanism; and generating, based on the navigation path and the terrain feature of the navigation path, the drive instruction for the first character using the first neural network.

With reference to the second aspect, in some implementations of the second aspect, the method further includes:

predicting, based on the drive instruction for the first character and a pose of the first character in a first frame, a reference pose of the first character in a second frame using a second neural network, where the second frame follows the first frame.

The second neural network is a neural network in a motion generator.

According to this embodiment of this application, a subsequent pose of the first character may be predicted based on the pose of the first character in the first frame. In view of this, transitioning between actions of the first character can be smoother. In addition, when the pose of the first character in the first frame is abnormal, the first character can quickly recover from an abnormal state based on the predicted subsequent pose of the first character.

With reference to the second aspect, in some implementations of the second aspect, the method further includes:

generating, based on the reference pose of the first character in the second frame and the pose of the first character in the first frame, a target pose of the first character in the second frame using a third neural network; simulating the target pose of the first character in the second frame; and training and optimizing the third neural network based on a result of the simulation to obtain a fourth neural network.

The third neural network and the fourth neural network are both DRL policy networks.

According to this embodiment of this application, the DRL policy network may be trained and optimized, to diversify a motion path of a digital character and make an action of the digital character more compliant with physical laws.

With reference to the second aspect, in some implementations of the second aspect, the result of the simulation includes one or more of the following: a reward for whether a simulated pose of the first character in the second frame is abnormal, and a reward for a similarity between a simulated path and the navigation path of the first character.

With reference to the second aspect, in some implementations of the second aspect, the second neural network is a neural network obtained through pretraining based on motion data, and the motion data includes one or more of the following: data collected by a motion capture device, data extracted from a video, and manually created data.

With reference to the second aspect, in some implementations of the second aspect, the first scene model is a three-dimensional scene model, and a terrain of the first scene model is a three-dimensional terrain. The first character is a non-player character NPC, the first character includes a plurality of joint points, and each of the plurality of joint points can be driven.

According to a third aspect, a computer-readable storage medium is provided, and includes a computer program. When the computer program runs on a computer, the computer is enabled to perform the method according to any one of the possible implementations of the first aspect, or the computer is enabled to perform the method according to any one of the possible implementations of the second aspect.

According to a fourth aspect, a chip or a chip system is provided. The chip or the chip system includes a processing circuit and an input/output interface. The processing circuit is configured to perform the method according to any one of the possible implementations of the first aspect, or is configured to perform the method according to any one of the possible implementations of the second aspect.

According to a fifth aspect, a computer program product is provided. The computer program product includes a computer program (which may also be referred to as code or instructions). When the computer program is run, a computer is enabled to perform the method according to any one of the possible implementations of the first aspect, or the computer is enabled to perform the method according to any one of the possible implementations of the second aspect.

## BRIEF DESCRIPTION OF DRAWINGS

FIG. 1 shows a system architecture to which this application is applicable;
FIG. 2 is a diagram of an example of a method provided in this application;
FIG. 3 is a diagram of an example of a method provided in this application;
FIG. 4 shows a basic principle of upsampling;
FIG. 5 shows a basic principle of downsampling;
FIG. 6 shows a case in which a state of a digital character is abnormal;
FIG. 7 shows a reward for a similarity between a navigation path and a simulated path; and
FIG. 8 is a diagram of an example of a method provided in this application.

## DESCRIPTION OF EMBODIMENTS

For ease of understanding, some terms in this application are first explained and described.

(1) Digital character

The digital character may be referred to as a character for short. Digital characters may be classified into player characters and non-player characters (non-player characters, NPCs). The player character is a character that can be controlled by a player. The NPC is a character that cannot be controlled by the player.

In addition, in an example, a character in this application is a character including a plurality of joint points, and each joint point may have corresponding location information (for example, 3D location information) and rotation information (where for example, the rotation information may be represented by using a quaternion, a rotation matrix, an Euler angle, or the like). Each joint point can be driven, to enable the character to perform a plurality of actions by driving bone joints.

(2) Convolutional neural network (convolutional neural network, CNN)

The convolutional neural network is a deep neural network with a convolutional structure, and is a deep learning (deep learning) architecture. The deep learning architecture is for performing multi-level learning at different levels of abstraction by using a machine learning algorithm. As a deep learning architecture, the CNN is a feed-forward (feed-forward) artificial neural network.

(3) Multilayer perceptron (multilayer perceptron, MLP)

The MLP is a forward-structured artificial neural network that can map a set of input vectors to a set of output vectors. The MLP network includes a hidden layer. There may be one or more hidden layers.

(4) Deep reinforcement learning (deep reinforcement learning, DRL)

The deep reinforcement learning is a combination of deep learning and reinforcement learning. The deep reinforcement learning uses perception capabilities of the deep learning to resolve modeling problems of policies and value functions, and uses decision-making capabilities of the reinforcement learning to define problems and optimize goals.

(5) Attention mechanism (attention mechanism)

An inspiration for the attention mechanism can be traced back to human physiological perception of environments. For example, a human visual system tends to select some information in an image for focused analysis while ignoring irrelevant information in the image. In a neural network, considering a limited computing capability, the attention mechanism may be used to allocate computing resources to more important tasks.

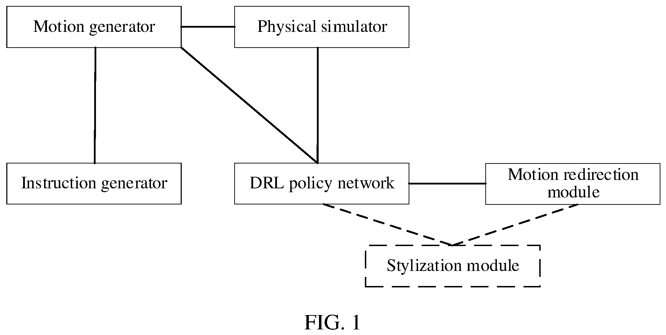

FIG. 1 shows a system architecture to which an embodiment of this application is applicable. The system architecture includes an instruction generator, a motion generator, a DRL policy network, a physical simulator, and a motion redirection module. Optionally, the system architecture further includes a stylization processing module.

In this embodiment of this application, in a pretraining phase, the motion generator may be trained by using motion data of a digital character. The pretrained motion generator may predict a motion of the digital character based on a motion pattern of the digital character. The motion data of the digital character may be motion data collected by a motion capture device, or may be motion data extracted from a video, or may be manually created motion data.

The motion data may include but is not limited to one or more of the following:

location information of a digital character joint point, rotation information of the digital character joint point (where for example, the rotation information may be represented by using a quaternion, a rotation matrix, an Euler angle, or the like), and velocity information of the digital character joint point.

For example, the physical simulator may be a Pybullet physical simulator, a Mujoco physical simulator, a Habitat-Sim physical simulator, or another type of physical simulator. This is not limited in this application.

Functions of modules in the system architecture are to be described subsequently in detail with reference to specific embodiments. Details are not described herein first.

It should be understood that names of the modules included in the system architecture are not limited in this application. For example, the motion generator may also be referred to as a "reference pose generator", a "reference action generator", or the like.

The following describes technical problems of this application.

Currently, a behavior tree-based approach, a state machine-based approach, or a motion matching-based approach may be used to drive a digital character (for example, drive an NPC).

In the behavior tree-based approach, a behavior tree may be constructed to represent a behavior of the digital character. The behavior tree includes a plurality of nodes, and each node represents one behavior of the digital character. To determine a behavior to be performed by the digital character, all the nodes of the behavior tree may be traversed, starting from a root node of the behavior tree. Whether to perform a behavior corresponding to a node is determined by checking whether a precondition for the node is met. Because all the nodes are traversed from the root node of the behavior tree each time, the behavior tree-based approach is time-consuming.

In the state machine-based approach, a plurality of states of the digital character may be constructed in advance, along with conditions for transitioning between different states. When a condition for transitioning is met, a state is transitioned, and an action/a behavior corresponding to a transitioned state is performed.

In the motion matching-based approach, an animation database (animation database) may be constructed in advance. During execution, based on an animation feature of a current frame and a user control signal, an animation frame with the lowest overhead is selected from the animation database as a next animation frame each time. Optionally, blend (blend) processing may be performed between the current frame and the next frame.

An overhead between animation frames may be measured based on information such as a motion track, a joint point location, rotation, and a velocity.

The following describes disadvantages of the three approaches for driving the digital character.

(1) The behavior tree, a state machine, or a database is preconfigured. As a result, the behavior (or action) of the digital character is fixed and lacks flexibility. Therefore, the approaches are not applicable to a scene with a complex terrain.

(2) Because the nodes in the behavior tree cannot be infinite, and states in the state machine cannot be infinite either, transitioning between actions of the digital character may not be smooth (or not be seamless). Motion matching requires construction of a large animation database, which consumes a large amount of running memory and is not very friendly for running at a peer end.

(3) Based on the foregoing three approaches, the action of the digital character has low realism due to poor adaptation to a terrain. For example, the action of the digital character may be distorted and may not conform to physical laws.

(4) A design of the behavior tree, a design of the state machine, and production of the animation database all need high costs and a high level of expertise for the personnel.

For the foregoing technical problems, this application provides a method 200. In the method 200, an instruction generator may be used to generate an instruction latent vector of a digital character, to implement self-driving of the digital character in a complex terrain, so as to improve action flexibility of the digital character, and improve smoothness of transitioning between actions of the digital character. Further, in the method 200, a DRL policy network may be trained and optimized, to diversify a motion path of the digital character and make the action of the digital character more compliant with physical laws.

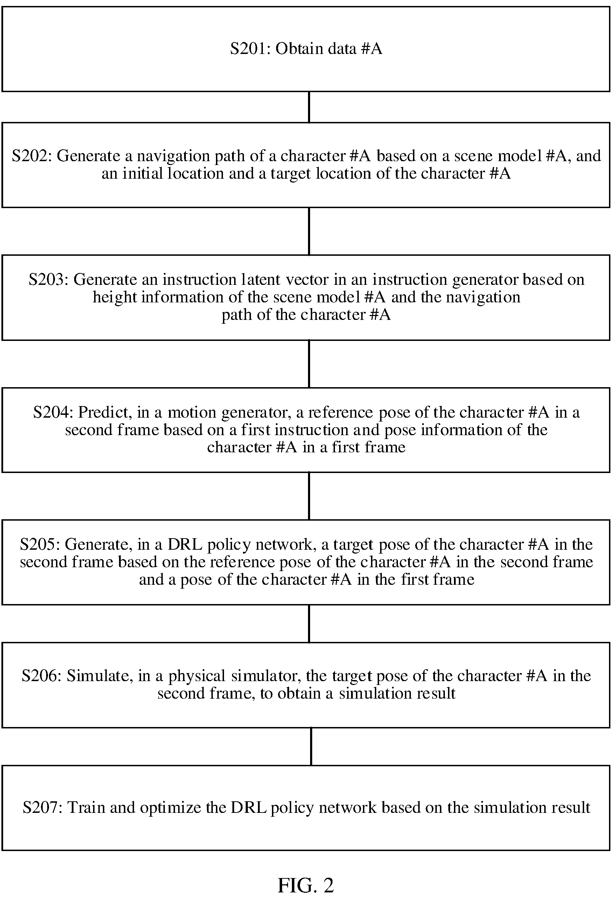

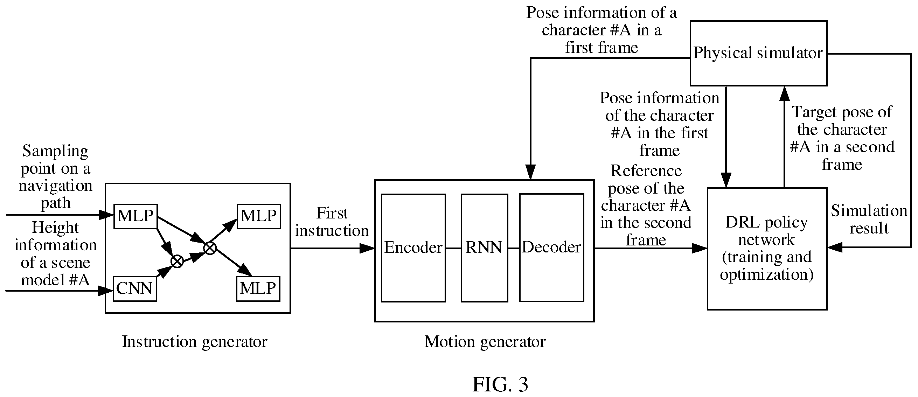

The following describes the method 200 with reference to FIG. 2 and FIG. 3. Specifically, the method 200 includes the following steps.

S201: Obtain data #A.

The data #A corresponds to a scene model #A, a character #A, an initial location of the character #A, and a target location of the character #A. The initial location and the target location are both in the scene model #A.

The initial location of the character #A (or a current location of the character #A) may be obtained from a physical simulator. In other words, the physical simulator outputs information about the current location of the character #A. For example, the physical simulator may periodically output the information about the current location of the character #A.

The target location of the character #A may be input by a user, or may be randomly generated. This is not limited in this application.

In a possible case, the scene model #A is a three-dimensional scene model, a terrain of the scene model #A is a three-dimensional terrain, the character #A is a humanoid NPC, the character #A includes a plurality of joint points, and each of the plurality of joint points can be driven.

For example, the scene model #A may include one or more of the following:

(1) a scene model that is generated based on a satellite image, a street view image, an image from an uncrewed aerial vehicle, a depth image, or the like using a specific modeling method (for example, a multi-view stereo (multi-view stereo, MVS) dense reconstruction method);
(2) a scene model constructed by a laser scanning point cloud;
(3) a manually designed scene model;
(4) an indoor scene model; and
(5) an outdoor scene model.

For example, the three-dimensional terrain of the scene model #A includes but is not limited to one or more of the following:
a plane terrain, an uneven terrain, and a stepped terrain.

S202: Generate a navigation path of the character #A based on the scene model #A, the initial location of the character #A, and the target location of the character #A.

In an implementation, a process of generating the navigation path of the character #A may include the following steps.

Step 1: Obtain a navigation mesh of the scene model #A. The "navigation mesh" of the scene model #A may be understood as an area within which walking is allowed in the scene model #A.

For example, in an approach, the user may input data of the scene model #A into a NavMesh algorithm or unity software, to obtain the navigation mesh of the scene model #A.

Step 1 may further include the following steps.

Step 1-1: Represent the scene model #A by using a voxelized mesh.

Step 1-2: Divide the voxelized scene model #A into a plurality of non-adjacent areas using a watershed algorithm based on an adjacency between voxel blocks.

Step 1-3: Extract contours of the plurality of areas generated in step 1-2.

For example, the contour of the area may be searched for counterclockwise, starting from a boundary of the area.

Step 1-4: Simplify boundaries of the plurality of areas, split the areas into triangles, and merge the triangles into a convex polygon.

Step 2: Generate the navigation path of the character #A using a pathfinding algorithm based on the initial location of the character #A, the target location of the character #A, and the navigation mesh of the scene model #A.

Step 2 may be implemented in a navigation pathfinding module.

For example, in an approach, the navigation path of the character #A may be obtained through calculation in the unity software. For example, the pathfinding algorithm may be an A* (A-star) algorithm or a funnel algorithm.

S203: Generate the instruction latent vector (denoted as a first instruction) in the instruction generator based on height information of the scene model #A and the navigation path of the character #A generated in S202.

In this application, the instruction latent vector may also be referred to as an instruction signal.

It should be understood that, if the scene model #A is the three-dimensional scene model, the user may input the scene model #A into CloudCompare software, to obtain the height information of the scene model #A. For example, the height information of the scene model #A may be represented by using a height map. The height map of the scene model #A is used for representing a height of each point in the scene model #A.

In an implementation, the first instruction may be generated through the following steps. Step 1: Obtain N sampling points from the navigation path of the character #A.

It should be understood that, if the scene model #A is the three-dimensional model, the sampling point is a 3D point. In this application, the "3D point" may be understood as a point including information about three dimensions.

The following describes two approaches for obtaining the N sampling points from the navigation path.

Approach 1: Obtain the N sampling points from the navigation path of the character #A based on upsampling.

For example, on the navigation path, a start point is a point A, and an end point is a point B. At least one sampling point may be inserted between the point A and the point B until there are a total of N sampling points on the navigation path.

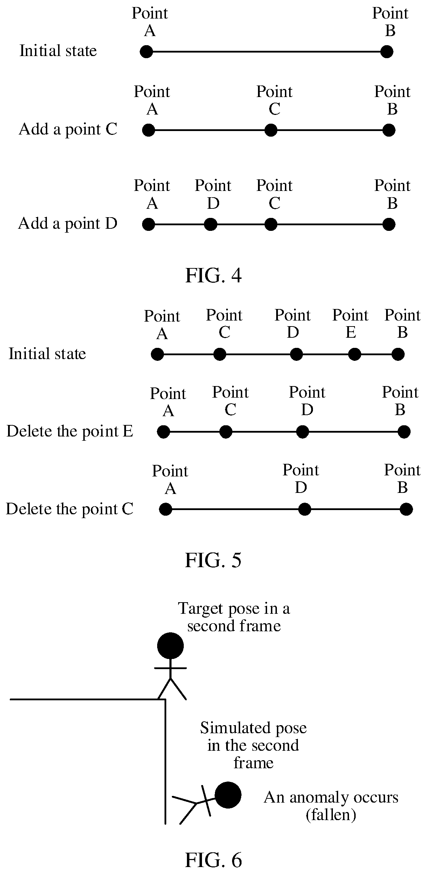

For example, as shown in FIG. 4, it is assumed that a value of N is 4, and in an initial state, there are only the point A and the point B on the navigation path. In this case, a point C may be inserted between the point A and the point B, and the point C is a middle point between the point A and the point B. Further, a point D is inserted between the point A and the point C, and the point D is a middle point between the point A and the point C.

Approach 2: Obtain the N sampling points from the navigation path of the character #A based on downsampling.

For example, if a quantity of current sampling points on the navigation path is greater than N, a start point and an end point of the navigation path may be retained, and at least one of other sampling points on the navigation path is deleted until there are a total of N sampling points on the navigation path.

For example, as shown in FIG. 5, it is assumed that a value of N is 3, and in an initial state, there are a total of five points on the navigation path, where on the navigation path, a start point is a point A, and an end point is a point B. In this case, a second-to-last point (a point E) may be first deleted, and a fourth-to-last point (a point C) is deleted. Finally, there are a total of three sampling points on the navigation path.

Basic principles of the upsampling and the downsampling are described above. It should be understood that a person skilled in the art may obtain the N sampling points from the navigation path of the character #A based on the principle of the upsampling or the downsampling.

Step 2: Input the height information of the scene model #A and the N sampling points obtained in step 1 into the instruction generator, to generate the first instruction.

The instruction generator includes an MLP network and a CNN.

Step 2 may further include the following steps.

Step 2-1: Input the N sampling points into the MLP network, and extract a path feature vector of the navigation path.

For example, the N sampling points may be ranked in an order from a start point to an end point, and are sequentially input into the MLP network.

Step 2-2: Input the height information of the scene model #A into the CNN, and extract a terrain feature of the scene model #A.

Step 2-3: Obtain a terrain feature vector of the navigation path using an attention mechanism in a neural network based on the path feature vector of the navigation path and the terrain feature of the scene model #A.

In other words, the attention mechanism may be used to enable a weight of height information on the navigation path of the character #A to be higher than a weight of height information at another location in the scene model #A.

Step 2-4: Input the path feature vector of the navigation path and the terrain feature vector of the navigation path into the MLP network, to obtain the first instruction.

The first instruction includes an action instruction and a motion instruction for the character #A.

For example, the action instruction may include but is not limited to at least one of the following actions: running, jumping, walking, flying, rolling, climbing, and squatting.

For example, the motion instruction may include motion information of a related action in the action instruction. For example, for walking and running, the motion instruction includes information such as a linear velocity and an angular velocity of the movement of the character #A; and for jumping, the motion instruction includes information such as a height and a linear velocity of the jumping of the character #A.

It can be learned from the foregoing descriptions that the first instruction is generated based on a terrain feature of the navigation path. Therefore, according to this embodiment of this application, the character #A can automatically avoid an obstacle in the complex terrain (for example, the three-dimensional terrain).

S204: Predict, in a motion generator, a reference pose of the character #A in a second frame based on the first instruction and pose information of the character #A in a first frame. The second frame is one or more frames following the first frame.

The motion generator in S204 is a motion generator obtained through pretraining.

The "pose information" in this application may be understood as information including "location information" and "rotation information". Details are not described below again.

A "pose of the character #A in the first frame" may also be understood as "a current pose of the character #A" or "a current state of the character #A". The pose of the character #A in the first frame includes location information of the character #A in the first frame and rotation information of a joint point of the character #A in the first frame.

Specifically, S204 may include the following steps.

Step 1: The instruction generator inputs the first instruction into the motion generator, and the physical simulator inputs the pose information of the character #A in the first frame into the motion generator.

Step 2: The motion generator generates the reference pose (also referred to as a reference action) of the character #A in the second frame based on the first instruction and the pose of the character #A in the first frame.

For example, a structure of the motion generator may be an encoder (Encoder)-recurrent neural network (recurrent neural network, RNN)-decoder (Decoder) structure. An encoder includes an MLP network. In the encoder, the first instruction and the pose information of the character #A in the first frame may be mapped to low-dimensional space using the MLP network. An RNN is used for learning a motion time sequence feature of the character #A in the low-dimensional space. A decoder includes an MLP network. In the decoder, a reference pose of the character #A in a next frame may be predicted based on the motion timing feature of the character #A output by the RNN.

In other words, based on the encoder-RNN-decoder (ERD for short) architecture, the reference pose of the character #A in the next frame may be predicted based on the instruction latent vector and the pose of the character #A in the current frame.

Optionally, poses of the character #A in a plurality of subsequent frames may be continuously predicted through autoregression. In other words, motion data of the character #A in the plurality of subsequent frames may be continuously predicted through autoregression. The "autoregression" may be understood as using an output of the decoder as an input of the encoder to continue to predict a subsequent pose of the character #A.

In addition, in a possible case, if the pose information of the character #A in the first frame is abnormal (for example, the character #A is in a fallen state in the first frame), the motion generator may generate some reference poses that enable the character #A to recover from an abnormal state to a normal state (for example, a reference pose that enables the character #A to stand up from the fallen state), so that the character #A can quickly recover from the abnormal state.

According to this embodiment of this application, the motion generator predicts the pose of the character #A based on the neural network, so that transitioning between actions of the character #A can be smoother.

S205: Generate, in the DRL policy network, a target pose of the character #A in the second frame based on the reference pose of the character #A in the second frame and the pose of the character #A in the first frame.

Specifically, S205 may include the following steps.

Step 1: The motion generator inputs the reference pose of the character #A in the second frame into the DRL policy network, and the physical simulator may input the pose information of the character #A in the first frame into the DRL policy network.

Step 2: The DRL policy network adjusts the reference pose of the character #A in the second frame, to generate the target pose of the character #A in the second frame.

In a case, the DRL policy network includes an actor network and a critic network, and the actor network and the critic network each are formed by a multi-layer fully connected (fully connected, FC) network.

The actor network is used to adjust the reference pose of the character #A in the second frame based on the reference pose of the character #A in the second frame and the pose information of the character #A in the first frame. In an approach, the actor network may generate an offset (offset) of the reference pose. Further, the reference pose is adjusted based on the offset (offset) of the reference pose, to generate the target pose of the character #A in the second frame.

The "offset" may be understood as a deviation between the target pose of the character #A in the second frame and the reference pose of the character #A in the second frame.

The critic network is used to optimize the actor network, to make the offset of the reference pose generated by the actor network more accurate.

S206: Simulate, in the physical simulator, the target pose of the character #A in the second frame, to obtain a simulation result. After the simulation, the physical simulator may update the pose (or a state) of the character #A.

In addition, the physical simulator may further input information about a current location of the character #A into the navigation pathfinding module.

It should be understood that a simulated pose of the character #A may be obtained by simulating, in the physical simulator, the target pose of the character #A in the second frame. The simulation result may include one or more of the following:

joint rotation information of the character #A in the simulated pose, joint velocity information of the character #A in the simulated pose, end executor location information of the character #A in the simulated pose, centroid location information of the character #A in the simulated pose, root node location information of the character #A in the simulated pose, and whether the state of the character #A during simulation is abnormal (for example, whether the character #A encounters an obstacle, whether the character #A falls down, or whether the character #A is stuck).

S207: Train and optimize the DRL policy network based on the simulation result in S206.

It should be understood that the DRL policy network may be trained and optimized for a plurality of times. The following describes approaches for training and optimizing the DRL policy network.

Approach 1:

The DRL policy network may calculate a similarity between the reference pose of the character #A in the second frame and the simulated pose of the character #A in the second frame, and use the similarity as a reward (reward). Further, the DRL policy network trains and optimizes the DRL policy network based on the similarity reward.

The similarity reward may include one or more of the following:

(1) a similarity reward, which is denoted as

$$r_q = \exp\left(-\frac{1}{\alpha_q^2} \sum_{i=1}^{n} \left\| \hat{q}_i - q_i \right\|^2 \right)$$

, between joint rotation in the simulated pose and joint rotation in the reference pose, where n represents a quantity of joints of the character #A, $\hat{q}_i$ represents rotation of an $i^{th}$ joint in the simulated pose, $q_i$ represents rotation of the $i^{th}$ joint in the reference pose, and $\alpha_q$ represents a weight of a similarity between the joint rotation;

(2) a similarity reward, which is denoted as

$$r_v = \exp\left(-\frac{1}{\alpha_v^2} \sum_{i=1}^{n} \left\| \hat{v}_i - v_i \right\|^2 \right),$$

, between a joint velocity in the simulated pose and a joint velocity in the reference pose, where $\hat{v}_i$ represents a velocity of the $i^{th}$ joint in the simulated pose, $v_i$ represents a

velocity of the i$^{th}$ joint in the reference pose, and $\alpha_v$ represents a weight of a similarity between the joint velocities;

(3) a similarity reward, which is denoted as

$$r_e = \exp\left(-\frac{1}{\alpha_e^2}\sum_{j=1}^{m}\left\|\hat{p}_j - p_j\right\|^2\right)$$

, between a location of an end executor in the simulated pose and a location of the end executor in the reference pose, where m represents a quantity of end executors of the character #A, $\hat{p}_j$ represents a location of a j$^{th}$ end executor in the simulated pose, $p_j$ represents a location of the j$^{th}$ end executor in the reference pose, and $\alpha_e$ represents a weight of a similarity between the locations of the end executor; and

(4) a similarity reward, which is denoted as

$$r_c = \exp\left(-\frac{1}{\alpha_c^2}\left\|\hat{p}_c - p_c\right\|^2\right)$$

, between a location of a centroid in the simulated pose and a location of a centroid in the reference pose, where $\hat{p}_c$ represents a location of the centroid of the character #A in the simulated pose, $p_c$ represents a location of the centroid of the character #A in the reference pose, and $\alpha_c$ represents a weight of a similarity between the locations of the centroid.

Approach 2:

The DRL policy network may determine whether the simulated pose of the character #A in the physical simulator is abnormal, for example, when the physical simulator simulates the motion of the character #A, whether the character #A encounters an obstacle, whether the character #A falls down, or whether the character #A is stuck. If an anomaly occurs, a reward may be a negative reward (for example, -1). The DRL policy network optimizes the DRL policy network based on the negative reward, to reduce a probability that the pose of the character #A is abnormal.

FIG. 6 is used as an example. Because there is a cliff on the motion path, when the target pose of the character #A in the second frame is simulated in the physical simulator, the character #A falls down. Therefore, the target pose of the character #A in the second frame is not realistic, in other words, is not compliant with physical laws. The DRL policy network optimizes the DRL policy network based on the negative reward, to make a target pose subsequently generated by the DRL policy network more realistic and more compliant with physical laws.

Approach 3:

The DRL policy network may calculate a similarity between the simulated path and the navigation path of the character #A, and use the similarity as a reward. Further, the DRL policy network trains and optimizes the DRL policy network based on the similarity reward.

The reward between the simulated path and the navigation path may be denoted as

$$r_H = \exp\left(-\frac{H}{\alpha_H^2}\right)$$

. H represents a Hausdorff (Hausdorff) distance between the simulated path and the navigation path, and $\alpha_H$ represents a weight of the similarity between the paths.

It is assumed that a point set A is a set of projected points that are of the root node of the character #A on the simulated path and that are on an XZ plane, and a point set B is a set of points of the character #A on the navigation path.

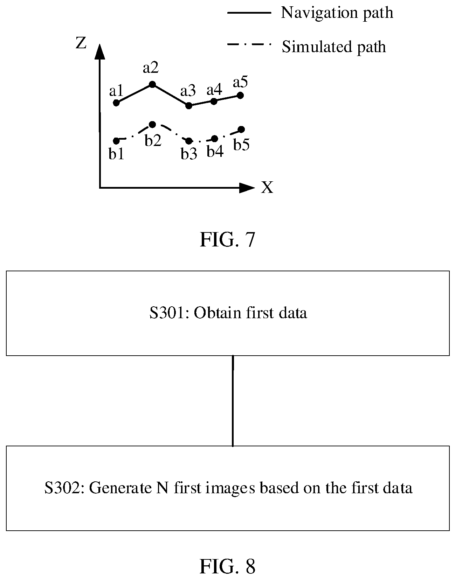

In a case, as shown in FIG. 7, the points in the point set A are in one-to-one correspondence with the points in the point set B. The point set A includes a point a1, a point a2, a point a3, a point a4, and a point a5, and the point set B includes a point b1, a point b2, a point b3, a point b4, and a point b5. The point a1 corresponds to the point b1, the point a2 corresponds to the point b2, the point a3 corresponds to the point b3, the point a4 corresponds to the point b4, and the point a5 corresponds to the point b5.

In another case, the points in the point set A are not in one-to-one correspondence with the points in the point set B. For example, the point set A includes a point a1 to a point a5, and the point set B includes a point b1 to a point b4.

The Hausdorff distance between the simulated path and the navigation path may be calculated by using the following formula:

$$H(A,B) = \max[h(A,B), h(B,A)].$$

$$h(A,B) = \max_{a\in A}(\min_{b\in B} dis(a,b))$$

and

$$h(B,A) = \max_{b\in B}(\min_{a\in A} dis(b,a))$$

. $H(A, B)$ is referred to as a bidirectional Hausdorff distance, $h(A, B)$ is referred to as a one-way Hausdorff distance from the set A to the set B, and $h(B, A)$ is referred to as a one-way Hausdorff distance from the set B to the set A. $dis(a,b)$ represents a Euclidean distance from a point a to a point b.

Therefore, a motion path of the character #A moving from the initial location to the target location is diversified, and is not unique. If the similarity between the simulated path and the navigation path of the character #A falls within a preset range, the simulated path is a reasonable path (an allowed path or an acceptable path).

To better understand the method 200, the following provides an example of applying the method 200. The example may be denoted as a method 300. Specifically, as shown in FIG. 8, the method 300 includes the following steps.

S301: Obtain first data.

The first data corresponds to a first scene model, a first character, and a first location of the first character in the first scene model. The first location is an initial location of the first character.

In a possible case, the first scene model is a three-dimensional scene model, and a terrain of the first scene model is a three-dimensional terrain. The first character is a humanoid NPC, the first character includes a plurality of joint points, and each of the plurality of joint points can be driven. For example, the first character may have a skin.

It should be understood that the first scene model and the model #A in S201 may be a same model, or may be different models, and the first character and the character #A in S201 may be a same character, or may be different characters. This is not limited in this application.

S302: Generate N first images based on the first data.

The N first images are in one-to-one correspondence with N second locations. An $n^{th}$ first image is used for presenting a pose of the first character at an $n^{th}$ second location, and the pose of the first character at the $n^{th}$ second location corresponds to a terrain feature of the first scene model at the $n^{th}$ second location. N is a positive integer, and n is an integer from 1 to N.

In addition, the first data further corresponds to a third location of the first character in the first scene model, and the third location is a randomly generated location or a user-specified location. The third location is a target location of the first character.

In other words, the first character moves from the first location to the third location in the first scene model, and passes through the N second locations during the movement. The N second locations are determined based on the first location and the third location. The N second locations are on a first path, and the first path is an actual motion path of the first character from the first location to the third location.

The first character corresponds to a second image at the first location, and the second image is used for presenting a pose of the first character at the first location. The first character corresponds to a third image at the third location, and the third image is used for presenting a pose of the first character at the third location.

The second image, the N first images, and the third image form a video stream (denoted as a first video), and the N first images are frames between the second image and the third image in the first video.

Specifically, for a process of generating the N first images based on the first data, refer to the following steps.

Step 1: Generate a navigation path (denoted as a second path) of the first character based on the first scene model and the first location and the third location of the first character.

A similarity between the first path and the second path falls within a preset range. Therefore, the actual motion path of the first character is diversified.

For a specific process of step 1, refer to S202.

Step 2: Generate an instruction latent vector (denoted as a second instruction) in an instruction generator based on height information of the first scene model and the navigation path of the first character generated in step 1.

In step 2, a terrain feature vector of the navigation path of the first character may be extracted using an attention mechanism in a neural network. In addition, the second instruction is generated based on a terrain feature of the navigation path. Therefore, according to this embodiment of this application, the first character can automatically avoid an obstacle in a complex terrain (for example, a three-dimensional terrain).

For a specific process of step 2, refer to S203.

Step 3: Predict, in a motion generator, a reference pose of the first character in a second frame based on the second instruction and pose information of the first character in a first frame. The second frame is one or more frames following the first frame.

For a specific process of step 3, refer to S204.

According to this embodiment of this application, the reference pose of the first character is predicted in the motion generator using the neural network, so that transitioning between actions of the first character can be smoother.

In addition, in a possible case, if the pose information of the first character in the first frame is abnormal, the motion generator may generate some reference poses, to enable the first character to quickly recover from an abnormal state.

For example, from the presented image, when the pose of the first character at the first location is abnormal, one or more of the N first images are used for presenting a process in which the first character transitions from an abnormal pose to a normal pose.

Step 4: Generate, in a DRL policy network, a target pose of the first character in the second frame based on the reference pose of the first character in the second frame and a pose of the first character in the first frame.

In a case, the DRL policy network in step 4 is obtained through training and optimization in the method 200. To be specific, based on the DRL policy network in step 4, the generated target pose of the first character is more compliant with physical laws. Therefore, a probability that the first character is in an abnormal state is correspondingly reduced, and the motion path of the first character is also diversified.

For a specific process of step 4, refer to S205.

Step 5: The DRL policy network inputs the target pose of the first character in the second frame into a physical simulator, and the physical simulator simulates the target pose of the first character in the second frame.

After the simulation, the physical simulator may update the pose (or a state) of the first character.

Step 6: The DRL policy network inputs the target pose of the first character in the second frame into a motion redirection module, and the motion redirection module migrates (or redirects) the target pose of the first character in the second frame to the first character, to drive the first character, so as to generate a corresponding image of the first character in the second frame.

Refer to the foregoing step 1 to step 6. The N first images may be generated. It can be learned from the foregoing step 1 to step 6 that the $n^{th}$ first image is obtained using the neural network based on an image preceding the $n^{th}$ first image.

Optionally, in another approach, after step 4, the DRL policy network can input the target pose of the first character in the second frame into a stylization processing module (which may also be referred to as a stylization network), and the stylization processing module adjusts the target pose of the first character in the second frame, so that the target pose of the first character better matches a style (or a characteristic or a feature) of the first character. Further, the stylization processing module may input, into the motion redirection module, the target pose of the first character in the second frame after the stylization. Further, the motion redirection module drives the first character.

In an approach, a neural network in the stylization processing module may be trained in advance, so that the stylization processing module learns stylization processing methods corresponding to a plurality of types of characters and/or a plurality of types of emotions.

In another approach, stylization processing methods corresponding to a plurality of types of characters and/or a plurality of types of emotions may be preconfigured in the stylization processing module.

For example, if the first data further includes information indicating that the first character is of an "elderly" type, the stylization processing module may adjust the target pose of the first character based on a processing method corresponding to the "elderly" type, so that the first character has a style of an elderly person, such as slow movement and a humpback.

For another example, if the first data further includes information indicating that the first character is of a "child" type, the stylization processing module may adjust the target pose of the first character based on a processing method corresponding to the "child" type, so that the first character has an active and lively child style.

For another example, if the first data further includes information indicating that the first character is of a proud (proud) emotion type, the stylization processing module may adjust the target pose of the first character based on a processing method corresponding to the emotion type, so that the first character has a confident style, such as chin up and chest out, and back straight.

According to this embodiment of this application, behavior patterns or actions of the first character can be automatically generated. Therefore, use of the method in this embodiment of this application can avoid a design of a behavior tree, a design of a state machine, creation of an animation template, and production of a database, so that costs are reduced.

A person of ordinary skill in the art may be aware that embodiments disclosed in this specification can be implemented by electronic hardware or a combination of computer software and electronic hardware. Whether such functions are performed by hardware or software depends on particular applications and design constraints of the technical solutions. A person skilled in the art may use different methods to implement the described functions for each particular application, but it should not be considered that the implementation goes beyond the scope of this application.

In the several embodiments provided in this application, the disclosed systems and methods may be implemented in other manners. For example, the described functional units (or functional modules) are merely examples, and are merely logical function division, and there may be another division modes during actual implementation. For example, functional units in embodiments of this application may be integrated into one processing unit, or each of the units may exist alone, or two or more units may be integrated into one unit.

When embodiments of this application are implemented in a form of software and sold or used as an independent product, a corresponding computer program (which may also be referred to as code or instructions) may be stored in a computer-readable storage medium. This application provides a computer-readable storage medium, including a computer program. When the computer program is run on a computer, the computer is enabled to perform the method according to any one of the possible implementations of the foregoing method embodiments.

The computer-readable storage medium includes: any medium that can store program code, such as a USB flash drive, a removable hard disk, a ROM, a RAM, a magnetic disk, or an optical disc.

The technical solutions of this application may be embodied in a form of a software product. Therefore, this application further provides a computer program product. The computer program product includes a computer program. When the computer program is run, a computer is enabled to perform the method according to any one of the possible implementations of the foregoing method embodiments.

In addition, an embodiment of this application further provides a chip system (or a chip). The chip system includes a logic circuit and an input/output interface.

The logic circuit may be a processing circuit in the chip system. The logic circuit may be coupled and connected to a storage unit, and invoke instructions in the storage unit, so that the chip system can implement the methods and functions in embodiments of this application. The input/output interface may be an input/output circuit in the chip system, and outputs information processed by the chip system, or inputs to-be-processed data or signaling information into the chip system for processing.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  An image processing method, comprising:

    obtaining first data, wherein the first data corresponds to a first scene model, a first character, and a first location of the first character in the first scene model; and
    generating N first images based on the first data, wherein the N first images are in one-to-one correspondence with N second locations, an $n^{th}$ first image is used for presenting a pose of the first character at an $n^{th}$ second location, and the pose of the first character at the $n^{th}$ second location corresponds to a terrain feature of the first scene model at the $n^{th}$ second location.

2.  The method according to claim 1, wherein

    the first data further corresponds to a third location of the first character in the first scene model, and the third location is a randomly generated location or a user-specified location; and
    the generating N first images based on the first data comprises:

    determining the N second locations based on the first location and the third location, wherein the N second locations are on a first path, and the first path is an actual motion path of the first character from the first location to the third location; and
    generating the N first images based on the N second locations and terrain features corresponding to the N second locations.

3.  The method according to claim 1 or 2, wherein the first data further corresponds to a second image, and the second image is used for presenting a pose of the first character at the first location;

the N first images are frames between the second image and a third image in a first video; and the third image is used for presenting a pose of the first character at the third location, the N second locations are on the first path, and the first path is the actual motion path of the first character from the first location to the third location.

4.  The method according to claim 2 or 3, wherein
    a similarity between the first path and a second path falls within a preset range, and the second path is a navigation path of the first character from the first location to the third location.

5.  The method according to any one of claims 1 to 4, wherein
    the $n^{th}$ first image is obtained through prediction using a neural network based on an image preceding the $n^{th}$ first image.

6.  The method according to any one of claims 1 to 5, wherein

    when the pose of the first character at the first location is abnormal, one or more of the N first images are used for presenting a process in which the first character transitions from an abnormal pose to a normal pose, wherein that the pose of the first character is abnormal comprises: the first character is in a fallen state, and the first character is stuck.

7.  The method according to any one of claims 1 to 6, wherein

    the first scene model is a three-dimensional scene model, and a terrain of the first scene model is a three-dimensional terrain; and
    the first character is a non-player character NPC, the first character comprises a plurality of joint points, and each of the plurality of joint points can be driven.

8.  A computer-readable storage medium, comprising a computer program or instructions, wherein when the computer program or the instructions are run on a computer, the computer is enabled to perform the method according to any one of claims 1 to 7.

9.  A computer program product, comprising instructions, wherein when the instructions are run on a computer, the computer is enabled to perform the method according to any one of claims 1 to 7.

10. A chip, wherein the chip is coupled to a memory, and is configured to read and execute program instructions stored in the memory, to implement the method according to any one of claims 1 to 7.

FIG. 1

S201: Obtain data #A

S202: Generate a navigation path of a character #A based on a scene model #A, and an initial location and a target location of the character #A

S203: Generate an instruction latent vector in an instruction generator based on height information of the scene model #A and the navigation path of the character #A

S204: Predict, in a motion generator, a reference pose of the character #A in a second frame based on a first instruction and pose information of the character #A in a first frame

S205: Generate, in a DRL policy network, a target pose of the character #A in the second frame based on the reference pose of the character #A in the second frame and a pose of the character #A in the first frame

S206: Simulate, in a physical simulator, the target pose of the character #A in the second frame, to obtain a simulation result

S207: Train and optimize the DRL policy network based on the simulation result

FIG. 2

FIG. 3

Initial state

Point A — Point B

Add a point C

Point A — Point C — Point B

Add a point D

Point A — Point D — Point C — Point B

FIG. 4

Initial state

Point A — Point C — Point D — Point E — Point B

Delete the point E

Point A — Point C — Point D — Point B

Delete the point C

Point A — Point D — Point B

FIG. 5

Target pose in a second frame

Simulated pose in the second frame

An anomaly occurs (fallen)

FIG. 6

FIG. 7

FIG. 8

## INTERNATIONAL SEARCH REPORT

| International application No. |
| --- |
| **PCT/CN2023/109801** |

### A.  CLASSIFICATION OF SUBJECT MATTER

G06T 13/40(2011.01)i

According to International Patent Classification (IPC) or to both national classification and IPC

### B.  FIELDS SEARCHED

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS, CNTXT, WOTXT, EPTXT, USTXT, CNKI, IEEE, VEN: 图像, 动画, 场景, 三维, 角色, 位置, 姿态, 运动, 位姿, 特征, 地貌, 地形, 起伏, 位置, 障碍, 随机, 指定, 路径, 导航, 帧, 神经网络, 摔倒, 非玩家, 关节, image, animation, scene, three dimensions, character, position, pose, motion, feature, landscape, terrain, heave, obstacle, random, assign, path, navigation, frame, neural network, fall, NPC, joint

### C.  DOCUMENTS CONSIDERED TO BE RELEVANT

| Category* | Citation of document, with indication, where appropriate, of the relevant passages | Relevant to claim No. |
| --- | --- | --- |
| X | CN 108182719 A (BEIJING DREAMWID TECH CO., LTD.) 19 June 2018 (2018-06-19) description, paragraphs [0052]-[0150], and figures 1-17 | 1-10 |
| X | CN 113129411 A (HUAWEI TECHNOLOGIES CO., LTD.) 16 July 2021 (2021-07-16) description, paragraphs [0112]-[0307], and figures 1-26 | 1-10 |
| A | CN 111292401 A (TENCENT TECHNOLOGY (SHENZHEN) CO., LTD.) 16 June 2020 (2020-06-16) entire document | 1-10 |
| A | US 9827496 B1 (ELECTRONIC ARTS, INC.) 28 November 2017 (2017-11-28) entire document | 1-10 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 October 2023** | **02 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/109801**

| Patent document cited in search report | | | Publication date (day/month/year) | Patent family member(s) | | | Publication date (day/month/year) |
|---|---|---|---|---|---|---|---|
| CN | 108182719 | A | 19 June 2018 | None | | | |
| CN | 113129411 | A | 16 July 2021 | None | | | |
| CN | 111292401 | A | 16 June 2020 | KR | 20220025023 | A | 03 March 2022 |
| | | | | JP | 2022553167 | A | 22 December 2022 |
| | | | | US | 2022139020 | A1 | 05 May 2022 |
| | | | | WO | 2021143289 | A1 | 22 July 2021 |
| | | | | EP | 4009282 | A1 | 08 June 2022 |
| | | | | EP | 4009282 | A4 | 21 December 2022 |
| US | 9827496 | B1 | 28 November 2017 | US | 10388053 | B1 | 20 August 2019 |

Form PCT/ISA/210 (patent family annex) (July 2022)

**REFERENCES CITED IN THE DESCRIPTION**

**Patent documents cited in the description**

- CN 202211163917